# EUROPEAN PATENT SPECIFICATION

(11) **EP 3 711 885 B1**
(45) Date of publication and mention of the grant of the patent: **10.04.2024**
(21) Application number: 19856931.1
(22) Date of filing: 05.09.2019
(51) Int. Cl.: B23D 79/02, B23D 79/10, B23K 26/38, B23K 26/70, B23K 37/04, B23D 79/04

(54) **SLAG REMOVAL DEVICE, AND CUTTING MACHINE WITH SUCH DEVICE**
VORRICHTUNG ZUM ENTFERNEN VON SCHLACKE, UND SCHNEIDVORRICHTUNG MIT EINER SOLCHEN VORRICHTUNG
DISPOSITIF D'ENLÈVEMENT DE SCORIES, ET MACHINE DE DÉCOUPE AVEC UN TEL DISPOSITIF

(30) Priority: 05.09.2018 KR 20180106098; 23.08.2019 KR 20190103489
(43) Date of publication of application: 23.09.2020
(73) Proprietor: Sohn, Hyeon Seung, Gyeonggi-do 15039 (KR)
(72) Inventor: Sohn, Hyeon Seung, Gyeonggi-do 15039 (KR)
(74) Representative: Beck & Rössig European Patent Attorneys
(86) International application number: PCT/KR2019/011513
(87) International publication number: WO 2020/050664

(56) References cited:
- KR-A- 20000 019 612
- KR-A- 20020 097 349
- KR-A- 20100 137 939
- KR-A- 20130 080 532
- KR-A- 20130 120 877
- KR-A- 20130 120 877
- KR-B1- 101 078 547
- KR-B1- 101 754 273
- US-A1- 2007 215 250

## Description

The present invention relates to a slag removal apparatus for removing slag from support plates in a cutting machine. Further, the present invention relates to a cutting machine implementing a slag removal apparatus.

In general, laser processing facilitates formation of a complicated shape without deformation, enables processing of a highly hard and brittle material, reduces thermal effects, and causes less noise by non-contact.

A work table on which a laser processing object is placed is made up of a plurality of narrow and slender support plates installed vertically side by side, and concave-convex portions are repeatedly formed on these support plates such that the object point-contacts at the top of the plates. The concave-convex portions have protrusions sharply pointed upward.

However, as laser processing proceeds for the object on the work table, slag which is a foreign material melted and separated from the object adheres to the support plates and is then hardened. As the slag increases in amount, the flatness of the placed object is impaired and workability is lowered, thereby decreasing the quality and work efficiency of the laser processing.

In order to solve the problem of the conventional work table, a conventional technique of removing slag from support plates in a laser processing machine has been proposed in KR 101754273 B1 entitled "Apparatus for Removing Slag of Laser Machine Supporting Plate". The document discloses an apparatus for removing hardened slag from support plates of a table in a laser processing machine, including a frame placed on the support plates, a driver mounted on the frame and including a vertical movement portion which moves up and down, and a scraper coupled to the vertical movement portion of the driver and shutting scraping jaws, when the vertical movement portion moves upward, wherein the driver is a hydraulic cylinder, the vertical movement portion is a cylinder rod, and the scraper is coupled to a distal end of the cylinder rod and includes a pair of scraper rods coupled to each other by a hinge to relatively rotate, while crossing each other, and a cam port coupled to top ends of the scraper rods to rotate the scraper rods around a hinge axis and coupled to the cylinder rod to move up and down integrally with the cylinder rod.

However, because the support plates are processed one at a time due to the structural limitations of the scraper, the conventional technique suffers from remarkably low slag removal efficiency and requires much time and effort for the slag removal operation.

Moreover, the conventional apparatus is moved by a wire of a crane. Therefore, a number of workers are basically required to handle the conventional apparatus, making it difficult to automate slag removal.

Therefore, the present disclosure has been made in view of the above problems, and it is an object of the present disclosure to provide a slag removal apparatus with a structure improved to enable simultaneous removal of slag from a plurality of support plates.

This technical problem of the present invention is solved by a slag removal apparatus comprising the features of claim 1 and a cutting machine comprising the features of claim 10. Advantageous embodiments of the present invention are defined in the dependent claims.

The slag removal apparatus and has the following effects.

First, because a scraper is installed to straddle across a plurality of support plates, slag attached to the plurality of support plates may simultaneously be removed along with rotation of the scraper, with the support plates inserted into a plurality of slots formed on the scraper along the length direction of the scraper. The resulting reduction of time and effort taken for the slag removal operation and stable vertical movements and motions of the scraper in predetermined paths may facilitate automation of the slag removal operation and hence increase slag removal efficiency.

Secondly, slag may simultaneously be removed from the plurality of support plates by means of the scraper including a plurality of blades.

Thirdly, a stable transfer path may be provided to the scraper by means of a transfer unit.

Fourthly, the slag removal operation may be automated and remotely controlled, using various sensors that sense the current position of the scraper and proximity of an operator and other obstacles.

In the Drawings:
FIG. 1 is a perspective view illustrating a slag removal apparatus according to a first embodiment of the present disclosure.
FIG. 2 is a front view illustrating the slag removal apparatus according to the first embodiment of the present disclosure.
FIG. 3 is a perspective view illustrating an exemplary scraper in the slag removal apparatus according to the first embodiment of the present disclosure.
FIG. 4 is a front view illustrating an operation of the exemplary scraper in the slag removal apparatus according to the first embodiment of the present disclosure.
FIG. 5 is a perspective view illustrating another exemplary scraper in the slag removal apparatus according to the first embodiment of the present disclosure.
FIG. 6 is a perspective view illustrating scrapers and a rotation driving unit in a slag removal apparatus according to a second embodiment of the present disclosure.
FIG. 7 is a side view illustrating operations of the scrapers and the rotation driving unit in the slag removal apparatus according to the second embodiment of the present disclosure.
FIG. 8 is a perspective view illustrating a schematic structure of a slag removal apparatus according to a third embodiment of the present disclosure.
FIG. 9 is a block diagram illustrating a control mechanism in the slag removal apparatus illustrated in FIG. 8.
FIG. 10 is a front view illustrating the schematic structure of a slag removing unit illustrated in FIG. 8.
FIG. 11 is a front view illustrating a scraper illustrated in FIG. 10.
FIG. 12 is an exploded perspective view illustrating the scraper illustrated in FIG. 11.
FIG. 13 is a partially cut sectional view illustrating the slag removing unit illustrated in FIG. 10.
FIG. 14 is a front view illustrating a blade and spacers illustrated in FIG. 10.
FIG. 15 is a diagram illustrating support plates each inserted between blades.
FIG. 16 is a diagram illustrating a method of removing the slag removing unit illustrated in FIG. 10.
FIGS. 17 and 18 are diagrams illustrating a method of controlling an arrangement interval between blades.
FIG. 19 is a plan view illustrating the slag removal apparatus illustrated in FIG. 8.
FIG. 20 is a sectional view illustrating the slag removal apparatus illustrated in FIG. 9, taken along line I-I.
FIG. 21 is a sectional view illustrating the slag removal apparatus illustrated in FIG. 9, taken along line II-II.
FIG. 22 is a diagram illustrating installation of a position sensing unit and an obstacle sensing unit illustrated in FIG. 9.
FIGS. 23 to 32 are diagrams referred to for describing a method of removing slag by the slag removing unit.

Reference will now be made in detail to some embodiments of the present disclosure, examples of which are illustrated in the accompanying drawings. Wherever possible, the same reference numbers will be used throughout the drawings to refer to the same or like parts. Lest it should obscure the understanding of the embodiments of the present disclosure, a description of a related known component or function will be avoided herein.

To describe the components of the embodiments of the present disclosure, the terms first, second, A, B, (a), (b), and so on may be used. These expressions are used only to distinguish one component from another component, not limiting the nature or sequence of the components. Further, unless otherwise defined, the terms including technical or scientific terms used in the disclosure may have the same meanings as generally understood by those skilled in the art. The terms as generally defined in dictionaries may be interpreted as having the same or similar meanings as or to contextual meanings of related technology. Unless otherwise defined, the terms should not be interpreted as ideally or excessively formal meanings.

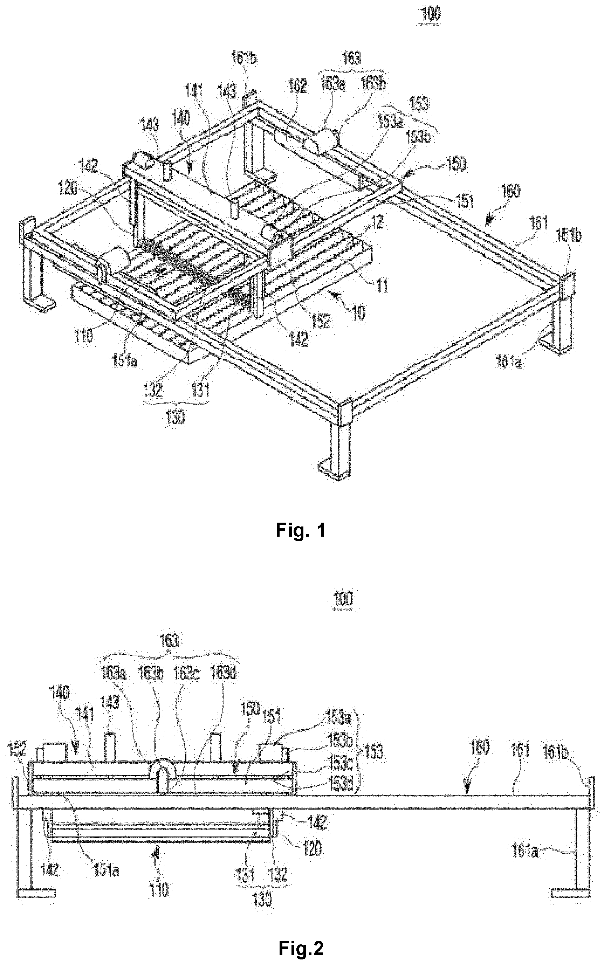

FIG. 1 is a perspective view illustrating a slag removal apparatus according to a first embodiment of the present disclosure, and FIG. 2 is a front view illustrating the slag removal apparatus according to the first embodiment of the present disclosure.

A slag removal apparatus 100 according to the first embodiment of the present disclosure is provided to remove slag which has been generated by heating and hence melting an object to be processed and then attached to support plates 11, when a metal or any other object to be processed is cut by a laser processing machine. However, the slag removal apparatus 100 is not limited thereto and may be applied to many other cutting machines which cut a metal or any other object by heating, such as a plasma cutting machine.

Referring to FIGS. 1 and 2, the slag removal apparatus 100 according to the first embodiment of the present disclosure, which removes slag attached to the support plates 11 of the laser processing machine, includes a scraper 110, a rotation support unit 120, a rotation driving unit 130, a lifting unit 140, and a first transfer unit 150.

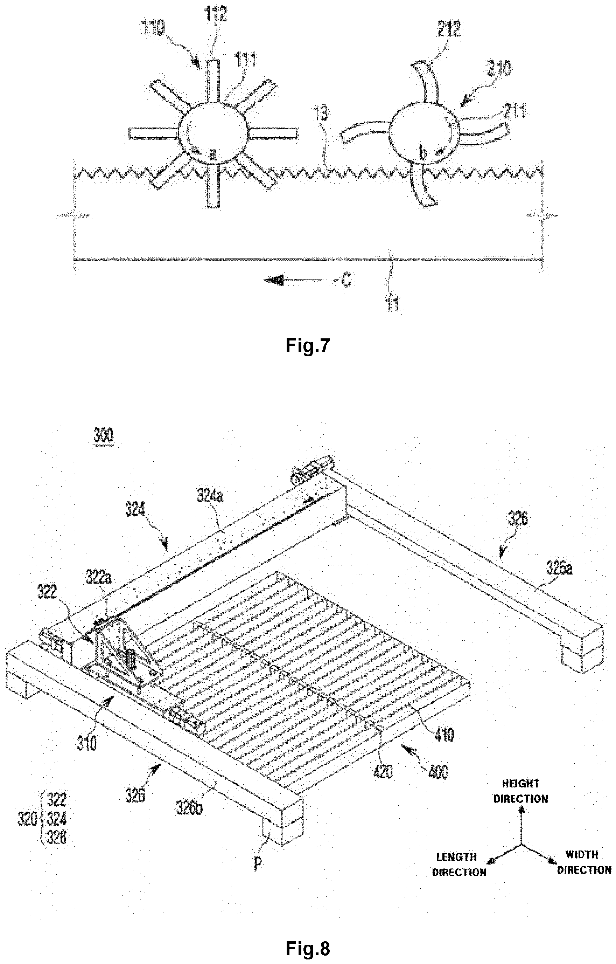

A plurality of support plates 11 may erect vertically, arranged side by side at a position where an object to be processed is placed on a work table 10. Convex-concave portions 13 (see FIG. 7) may be formed continuously on the top ends of the support plates 11, for point-contact with the object.

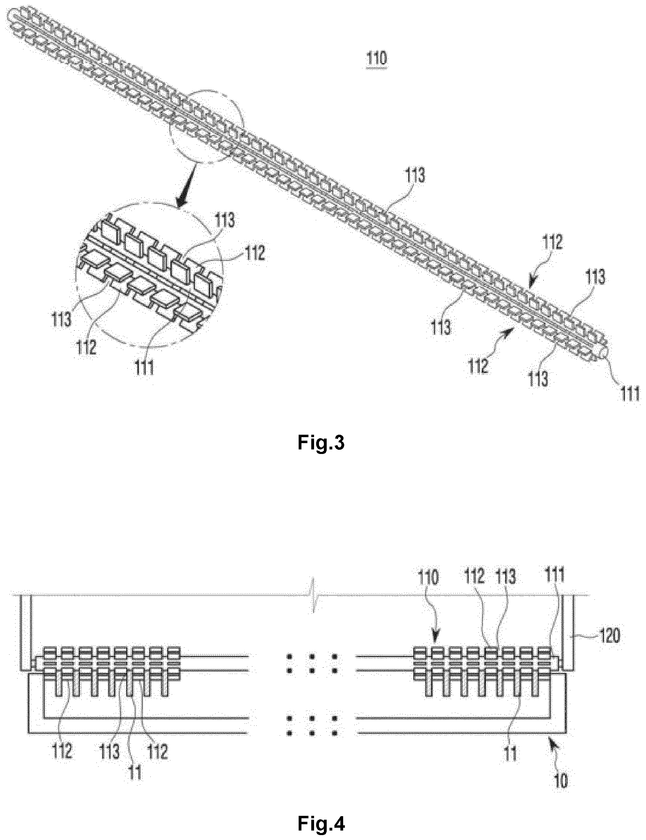

Referring to FIGS. 3 and 4, the scraper 110 is provided with a plurality of blades 112 around the outer surface of a bar 111 positioned to cross the support plates 11. As a plurality of slots 113 are formed in the blades 112 along the length direction, the plurality of slots 113 are provided around the bar 111 and in the length direction of the bar 111.

In the scraper 110, the blades 112 may be formed straight in a radial direction from the bar 111 as in this embodiment. Therefore, the straight blades 112 are favorable in securing a relatively large rotation radius, thereby contributing to widening a slag removal range.

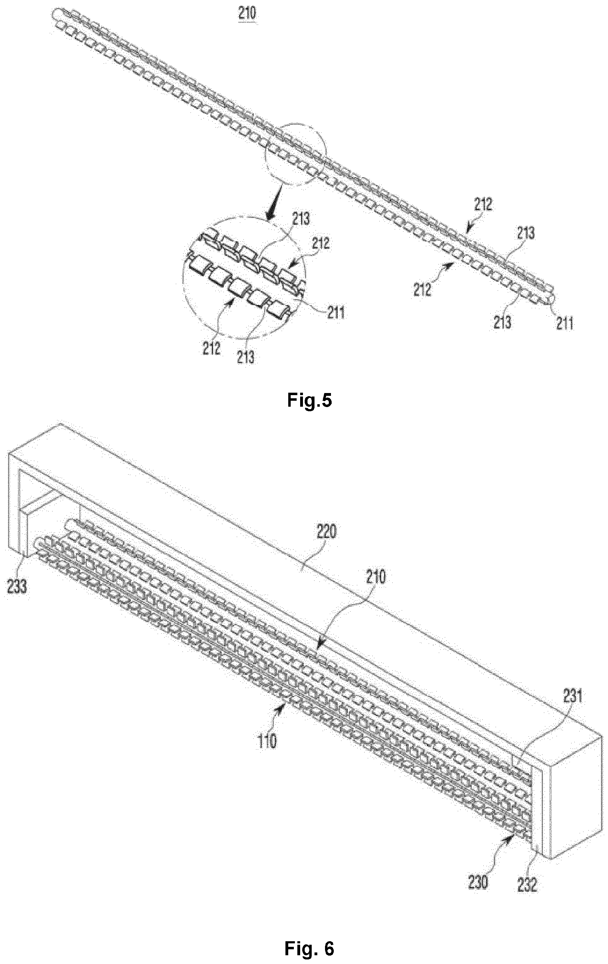

Referring to FIG. 5, blades 212 may be formed to be curved in a radial direction from a bar 211 in another exemplary scraper 210. Therefore, slag attached to the support plates 11 each being inserted between slots 213 may be smoothly removed by the blades 212 having a curvature, thereby contributing to increasing slag removal force.

Referring to FIGS. 1 and 2, the rotation support unit 120 is installed in such a manner that the scraper 110 is rotatable, and rotation shafts (not shown) provided at both ends of the bar 111 of the scraper 110 are rotatably engaged with the rotation support unit 120 through bearings. For this purpose, the rotation support unit 120 may be formed in a frame structure shaped into "⊏" or a rotational coupling structure shaped into "11" or other various shapes.

When the support plates 11 are inserted into the slots 113 of the scraper 110, the rotation driving unit 130 rotates the scraper 110 from the rotation support unit 120 to remove slag attached to the support plates 11 by the blades 112 of the scraper 110. The rotation driving unit 130 is installed on the rotation support unit 120 to provide rotational force to the bar 111 of the scraper 110. For example, the rotation driving unit 130 may include a rotation driving motor 131 providing rotational force and a transfer unit 132 transferring the rotational force of the rotation driving motor 131 to the rotation shafts of the bar 111. The transfer unit 132 may include various power transmission mechanisms for transferring rotational force, such as a decelerator, a plurality of gear assemblies, belts and pulleys, or a chain and a sprocket.

The lifting unit 140 is configured to move up and down the rotation support unit 120 to lower the scraper 110, so that the support plates 11 are inserted into the respective slots 113, or to raise the scraper 110 to its original position.

The lifting unit 140 may include a transfer member 141 installed to move along the length direction of the support plates 11 by the first transfer unit 150, lifting guides 142 guiding the rotation support unit 120 to move up to or move down from the transfer member 141, and lifting drivers 143 raising and lowering the rotation support unit 120 to and from the transfer member 141. To guide upward and downward movements of the rotation support unit 120, the lifting guides 142 may be configured in, for example, a frame structure vertically slidably coupled to both sides of the rotation support unit 120, as in this embodiment. In another example, the lifting guides 142 may be vertical guide shafts slidably coupled to both sides of the rotation support unit 120. In another example, the lifting guides 142 may have various sliding coupling structures including vertical LM guides. Further, the lifting drivers 143 may be cylinders operating hydraulically or pneumatically as in this embodiment, so as to move up and down the rotation support unit 120, driving means that convert rotational force of a rotation motor to a linear motion, or driving means that directly provide a linear motion, such as a linear actuator.

The first transfer unit 150 is configured to move the rotation support unit 120 along the length direction of the support plates 11, so that the scraper 110 removes slag along the length direction of the support plates 11.

The first transfer unit 150 may include, for example, a first transfer frame 151 supporting the lifting unit 140 to move along the length direction of the support plates 11, first transfer guides 152 guiding the lifting unit 140 to move on the first transfer frame 151 along the length direction of the support plates 11, and first transfer drivers 153 reciprocally moving the lifting unit 140 along the length direction on the first transfer frame 151. The first transfer frame 151 enables movement of the transfer member 141, for example, by bearings or wheels, so that the lifting unit 140 may move. The first transfer frame 151 is not limited thereto, and enables linear movement of the transfer member 141 in various manners. Various guide members such as LM guides, a lead screw and a ball screw, a sliding frame and a bearing, and so on are available for the first transfer guides 152, to guide linear reciprocal movement of the lifting unit 140, specifically the transfer member 141 in a predetermined path. Further, each of the first transfer drivers 153 may include, for example, a first transfer motor 153a installed to the transfer member 141 and providing driving force, a transfer unit 153b transferring rotational force of the first transfer motor 153a, such as a gear assembly, a decelerator, a belt and a pulley, or a chain and a sprocket, a pinion 153c installed to the transfer member 141 to be rotated by the transfer unit 153b, and a rack 153d provided in the first transfer frame along the length direction of the support plates 11, to be gear-engaged with the pinion 153c. In another example, various configurations enabling movement of the transfer member 141 on the first transfer frame 151 by rotational force of the rotation motor may be applied to the first driver 153. Alternatively, a linear actuator directly providing linear driving force may be used as the first driver 153.

The slag removal apparatus 100 according to the first embodiment of the present disclosure may further include a second transfer unit 160 that moves the rotation support unit 120 to move in a transverse direction of the support plates 11. Therefore, the second transfer unit 160 enables an operation on the work stable 10 too wide to be processed by moving the scraper 110 just once.

The second transfer unit 160 may include a second transfer frame 161 supporting the first transfer unit 150 to move in the transverse direction of the support plates 11, second transfer guides 162 guiding the movement of the first transfer unit 150 in the transverse direction of the support plates 11, and second transfer drivers 163 reciprocally moving the first transfer unit 150 in the transverse direction of the support plates 11. The second transfer frame 161 enables movement of the first transfer frame 151, for example, by bearings or wheels 151a, so that the first transfer unit 150 may move. The second transfer frame 161 is not limited thereto, and enables linear movement of the first transfer frame 151 in various manners. Various guide members such as LM guides, a lead screw and a ball screw, a sliding frame and a bearing, and so on are available for the second transfer guides 162, to guide reciprocal linear movement of the first transfer unit 150, specifically the first transfer frame 151 in a predetermined path. Further, each of the second transfer drivers 163 may include, for example, a second transfer motor 163a installed to the first transfer frame 151 and providing driving force, a transfer unit 163b transferring rotational force of the second transfer motor 163a, such as a gear assembly, a decelerator, a belt and a pulley, or a chain and a sprocket, a pinion 163c installed to the first transfer frame 151 to be rotated by the transfer unit 163b, and a rack 163d provided in the second transfer frame 161 along the transverse direction of the support plates 11, to be gear-engaged with the pinion 163c. Various configurations enabling movement of the first transfer frame 151 on the second transfer frame 161 by rotational force of the rotation motor may be applied to the second driver 163. Alternatively, a linear actuator directly providing linear driving force may be used as the second driver 163.

Unlike this embodiment, the first transfer unit moving the rotation support unit 120 along the length direction of the support plates 11 and the second transfer unit moving the rotation support unit 120 along the transverse direction of the support plates 11 may be installed in a different order. That is, the second transfer unit may be configured to move the rotation support unit 120 along the transverse direction of the support plates 11, and the first transfer unit may be configured to move the rotation support unit 120 along the length direction of the support plates 11, along with the second transfer unit. For this purposes, for example, the second transfer unit may include the second transfer frame supporting the lifting unit 140 to move in the transverse direction, the second transfer guides guiding the movement of the lifting unit 140 in the transverse direction on the first transfer frame, and the second transfer drivers reciprocally moving the lifting unit 140 in the transverse direction on the second transfer frame. Further, the first transfer unit may include the first transfer frame supporting the second transfer unit to move in the length direction, the first transfer guides guiding the movement of the second transfer unit in the length direction on the first transfer frame, and the first transfer drivers reciprocally moving the second transfer unit in the length direction on the first transfer frame. Components with the same names as in the foregoing embodiment may be configured in correspondence with their counterparts in the foregoing embodiment, and thus will not be described herein to avoid redundancy.

FIG. 6 is a perspective view illustrating scrapers and a rotation driving unit in a slag removal apparatus according to a second embodiment of the present disclosure, and FIG. 7 is a side view illustrating operations of the scrapers and the rotation driving unit in the slag removal apparatus according to the second embodiment of the present disclosure.

Referring to FIGS. 6 and 7, a plurality of scrapers 110 and 210 may be arranged in parallel to be rotated by a rotation driving unit 230, in a rotation support unit 220 in the slag removal apparatus according to the second embodiment of the present disclosure.

As illustrated in FIGS. 3 and 5, the blades 112 of one 110 of the scrapers 110 and 210 may be formed to erect straight in the radius direction from the bar 111, whereas the blades 212 of the other scraper 210 may be formed to be curved in the radius direction from the bar 211. The rotation driving unit 230 may include as many drivers as the number of scrapers 110 and 310 to rotate the scrapers 110 and 210, respectively, which should not be construed as limiting the present disclosure. Instead, the rotation driving unit 230 may include a single driver configured to transfer driving force to each of the scrapers 110 and 210. Further, while the scrapers 110 and 210 are shown in FIG. 7 as rotating in directions a and b, respectively by a linear motion C with respect to the support plates 11, this is merely an example. Needless to say, the scrapers 110 and 210 may be rotated in a different manner.

The rotation driving unit 230 may include, for example, one or more rotation driving motors 231 providing rotational force, and a transfer unit 232 transferring rotation force of the rotation driving motors 231 to rotation shafts of the scrapers 110 and 210. Further, an interworking unit 233 may be included, which couples the scrapers 110 and 210 to each other by gears or chains of a predetermined gear ratio so that the scrapers 110 and 210 maintain their predetermined numbers of revolutions. When there is a single rotation driving motor 231, the transfer unit 232 may transfer the rotational force of the rotation driving motor 231 distributedly to the rotation shafts of the scrapers 110 and 210 by means of a gear assembly, a belt and a pulley, or a chain and a sprocket. When there are a plurality of rotation driving motors 231, the transfer unit 232 may transfer the rotational force of the rotation driving motors 231 to the respective rotation shafts of the scrapers 110 and 210 by means of a gear assembly, a belt and a pulley, or a chain and a sprocket.

In the slag removal apparatus 100 according to the first and second embodiments of the present disclosure, a scraper is installed to straddle across a plurality of support plates. Therefore, with the support plates inserted into a plurality of slots formed on the scraper along a length direction, slag can is removed simultaneously from the plurality of support plates by rotation of the scraper, thereby reducing time and effort taken to remove slag.

Further, in the slag removal apparatus 100 according to the first and second embodiments of the present disclosure, as the scraper stably moves up and down and makes a linear motion in predetermined paths, a slag removal operation can be automated easily and hence the efficiency of the slag removal operation can be increased.

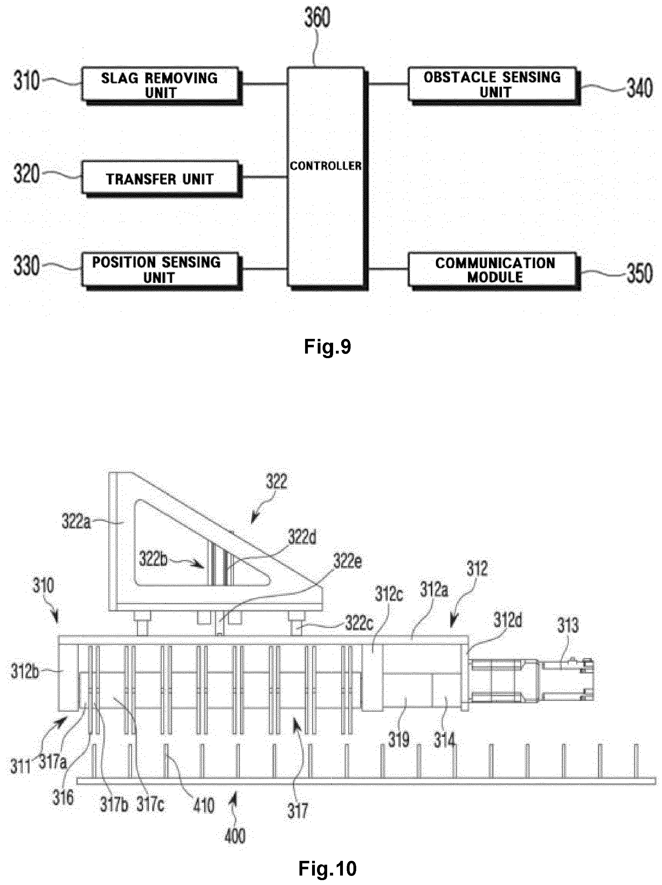

FIG. 8 is a perspective view illustrating a schematic structure of a slag removal apparatus 300 according to a third embodiment of the present disclosure, and FIG. 9 is a block diagram illustrating a control mechanism of the slag removal apparatus illustrated in FIG. 8.

The slag removal apparatus 300 according to the third embodiment of the present disclosure is provided to remove slag which has been generated by heating and melting a metal or any other object to be processed and attached to support plates 410, when the metal or object is cut by a laser processing machine. However, the slag removal apparatus 300 is not limited thereto, and may be applied to various cutting machines operating by thermally cutting a metal or any other object to be processed, such as a plasma cutting machine.

Referring to FIGS. 8 and 9, the slag removal apparatus 300 includes a slag removing unit 310 that simultaneously removes slag attached to a plurality of support plates 410, a transfer unit 320 that transfers the slag removing unit 310 in a predetermined direction, a position sensing unit 330 that senses the position of the slag removing unit 310, an obstacle sensing unit 340 that senses an obstacle approaching the slag removal apparatus 300, a communication module 350 that conducts wired/wireless communication, and a controller 360 that provides overall control to the slag removal apparatus 300.

As illustrated in FIG. 8, the slag removal apparatus 300 is placed such that a support plate assembly 400 of a cutting machine is positioned in a predetermined work area. For this purpose, pillars P may be installed under housings 322a, 324a, 326a, and 326b of the later-described transfer unit 320 in order to space the slag removal apparatus 300 apart from the ground by a predetermined height.

As illustrated in FIG. 8, the support plate assembly 400 includes a plurality of support plates 410 arranged apart from each other by a predetermined gap along a width direction, and one or more gap maintaining plates 420 crossing the support plates 410 to keep the support plates 410 apart from each other by the predetermined gap. In general, the gap maintaining plates 420 are lower than the support plates 410 by a predetermined height. When the support plate assembly 400 is provided in this manner, blades 316 of a later-described scraper 311 can be arranged in parallel to the direction in which the support plates 410 are arranged in the slag removal apparatus 300.

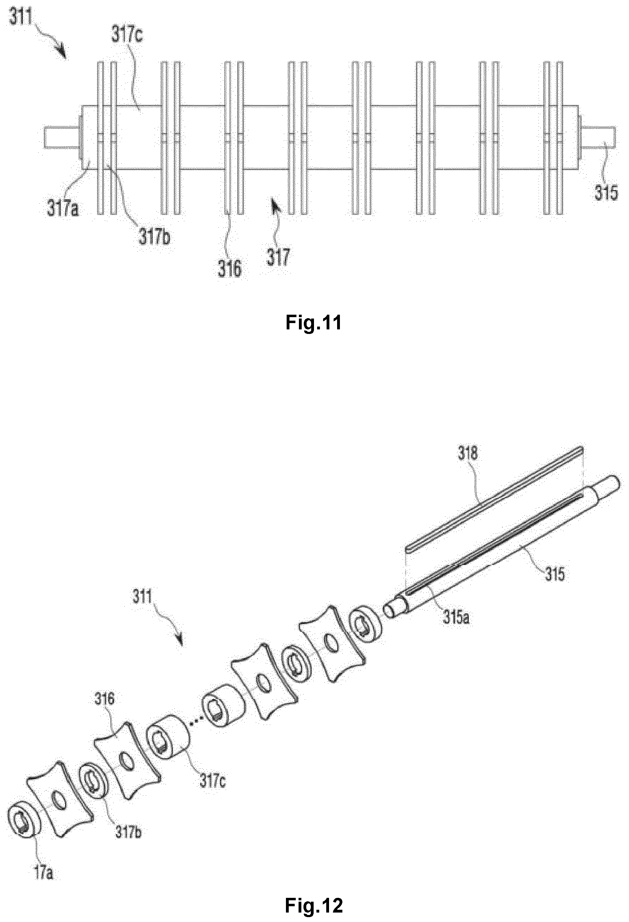

FIG. 10 is a front view illustrating a schematic structure of the slag removing unit illustrated in FIG. 8, FIG. 11 is a front view illustrating the scraper illustrated in FIG. 10, and FIG. 12 is an exploded perspective view illustrating the scraper illustrated in FIG. 11.

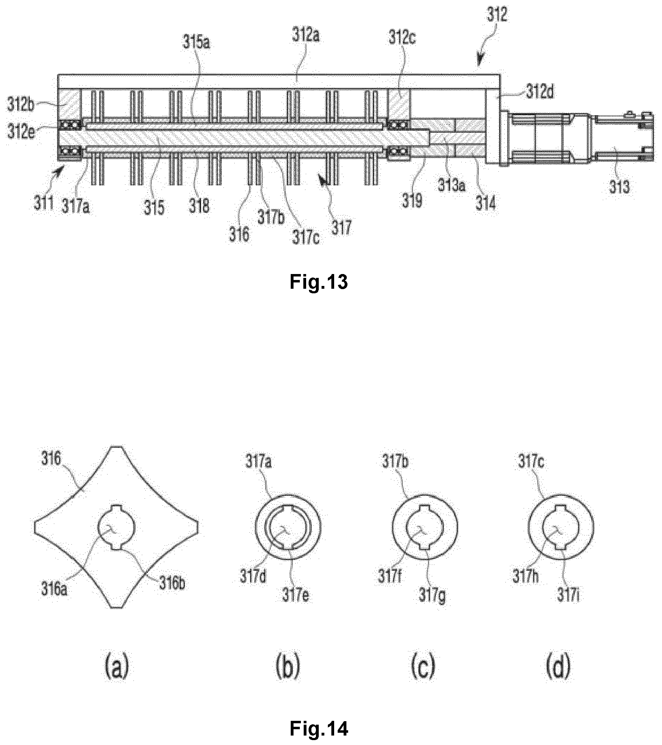

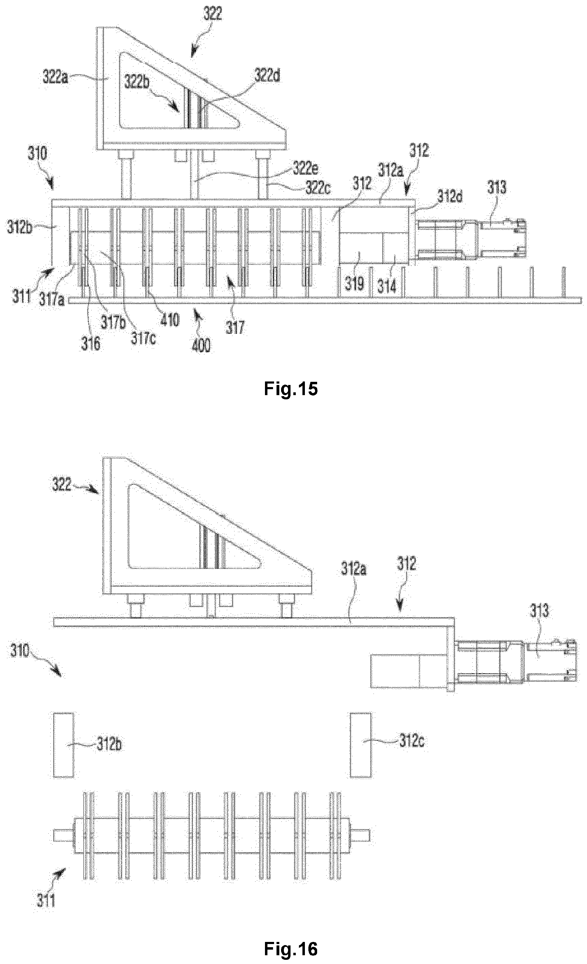

Further, FIG. 13 is a partially cut sectional view illustrating the slag removing unit illustrated in FIG. 10, FIG. 14 is a front view illustrating a blade and spacers illustrated in FIG. 10, and FIG. 15 is a diagram illustrating insertion of each of the support plates between blades.

As illustrated in FIG. 10, the slag removing unit 310 may include the scraper 311 removing slag attached to the support plates 410, a support frame 312 supporting the scraper 311, a driving member 313 driving the scraper 311 to rotate, and a torque sensor 314 sensing rotational load applied to the scraper 311 and/or the driving member 313 during slag removal.

As illustrated in FIGS. 11 and 12, the scraper 311 may include a shaft 315, a plurality of blades 316 axially engaged with the shaft 315, spacers 317 axially engaged with the shaft 315 to maintain an installation gap between the blades 316, and engagement keys 318 fastening the blades 316 and the spacers 317 to the shaft 315 to rotate the blades 317 and the spacers 317 along the shaft 315.

As illustrated in FIGS. 12 and 13, one or more key grooves 315a may be formed on the outer circumferential surface of the shaft 315, so that the engagement keys 318 may be inserted into the key grooves 315a.

The blades 316 are not limited to any particular shape. That is, the blades 316 may be formed into any of various shapes, as far as they scrape slag away from both surfaces of each of the support plates 410 when the blades 316 are rotated by the driving member 313. As illustrated in FIG. 14(a), each of the blades 316 may include an insertion hole 316a into which the shaft 315 is inserted, and key grooves 316b into which the engagement keys 318 engaged in the key grooves 315a of the shaft 315 are inserted.

The number of these blades 316 is not limited to any particular value. A plurality of blades 316 may be installed to simultaneously remove slag from a predetermined number of support plates 419 among the total support plates 410. That is, a plurality of blades 316 are installed such that each of the predetermined number of support plates 410 are inserted between blades 316 belonging to different pairs.

As illustrated in FIGS. 14(b), 14(c), and 14(d), each of the spacers 317 may include an insertion hole 317d, 317f, or 317h into which the shaft 315 is inserted, and key grooves 317e, 317g, or 317i through which the engagement keys 318 engaged with the key grooves 315a of the shaft 315 are inserted. The spacers 317 may be formed into various shapes. For example, there may be first spacers 317a closing both ends of the shaft 315, second spacers 317b each spacing a pair of adjacent blades 316 apart from each other by a gap corresponding to the width of a support plate 410, and third spacers 317c each spacing blades 316 belonging to different pairs from each other by a gap corresponding to the arrangement gap between support plates 410.

As illustrated in FIG. 10, the first spacers 317a are disposed on both ends of the shaft 315 to prevent slip-off of outermost blades 316 on both sides of the shaft 315 from the shaft 315.

As illustrated in FIG. 10, each of the second spacers 317b has a width equal to the width of a support plate 410 or a predetermined ratio to the width of the support plate 410. As illustrated in FIG. 11, each of the second spacers 317b is interposed between a pair of blades 316. Then, one of the support plates 410 may be inserted between the pair of blades 316, as illustrated in FIG. 15.

As illustrated in FIG. 15, when the blades 316 are mounted on the support plates 410, a pair of blades 316 are disposed between every pair of adjacent support plates 410. Thus, each of the third spacers 317c has a width corresponding to a value calculated by subtracting the widths of a pair of blades 316 from the arrangement gap between the support plates 410. As illustrated in FIG. 11, each of the third spacers 317c is interposed between blades 316 belonging to different pairs. Therefore, each of the third spacers 317c may maintain a constant gap between blades 316 belonging to different pairs so that each blade 316 is brought into close contact with one side surface of a support plate 410, as illustrated in FIG. 15.

As illustrated in FIG. 13, the engagement keys 318 are formed into shapes corresponding to those of the key grooves 315a, 316b, 317c, 317g, and 317i to be inserted into the key grooves 315a, 316b, 317e, 317g, and 317i of the shaft 315, the blades 316, and the spacers 317. Further, as illustrated in FIG. 13, when the engagement keys 318 are engaged in the key grooves 315a of the shaft 315, the engagement keys 318 protrude outward from the shaft 315 by predetermined lengths.

As many engagement keys 318 as the number of key grooves 315a of the shaft 315 may be provided, so that each of the engagement keys 318 is inserted into one of the key grooves 315a. With the engagement keys 318 inserted into the key grooves 315a of the shaft 315, the blades 316 and the spacers 317 may be sequentially engaged axially with the shaft 315 in a predetermined order so that the parts of the engagement keys 318 protruding outward from the shaft 315 may be inserted into the key grooves 315a, 316b, 317e, 317g, and 317i of the blades 316 and the spacers 317. Then, as the blades 316 and the spacers 317 are fastened around the shaft 315 by the engagement keys 318, they may be kept at their arrangement positions and driven to rotate along the shaft 315 during driving of the driving member 313. Therefore, the scraper 311 may be configured, in which the blades 316 are arranged according to the width and arrangement gap of the support plates 410.

As illustrated in FIG. 13, the scraper 311 having the above-described structure is installed such that both ends of the shaft 315 are rotatably supported by rotation support plates 312b and 312c of the support frame 312, respectively. A bearing or a rotation support member 312e supporting rotation of the shaft 315 may be installed to each of the rotation support plates 312b and 312c. Further, one of both ends of the shaft 315 may penetrate through the rotation support plate 312c and be axially engaged with a rotation shaft of the driving member 313 by means of a coupler 319. Thus, when the driving member 313 rotates, driving force output from the driving member 313 may be transferred to the blades 316 through the shaft 315 and the engagement keys 318. Accordingly, the blades 316 may be driven to rotate by the driving force from the driving member 313 and remove slag attached to the support plates 410 by scraping out the slag.

FIG. 16 is a diagram illustrating a method of removing the slag removing unit illustrated in FIG. 10, and FIGS. 17 and 18 are diagrams illustrating a method of controlling the arrangement gap between blades.

The width and arrangement gap of the support plates 410 may vary depending on the type and process condition of a laser processing machine or any other cutting machine. In this case, after the scraper 311 is removed from the support frame 312, the spacers 317 may be exchanged according to the width and arrangement gap of the support plates 410 in the cutting machine which is to perform a slag removal operation.

As illustrated in FIG. 16, the scraper 311 is removed from the support frame 312 by separating the rotation support plates 312b and 312c from a body 312a of the support frame 312. For this purpose, each of the rotation support plates 312b and 312c may be detachably engaged with the body 312a of the support frame 312 by means of a bolt or any other fastening member.

Subsequently, the blades 316 and the spacers 317 are removed sequentially from the shaft 315, as illustrated in FIG. 12.

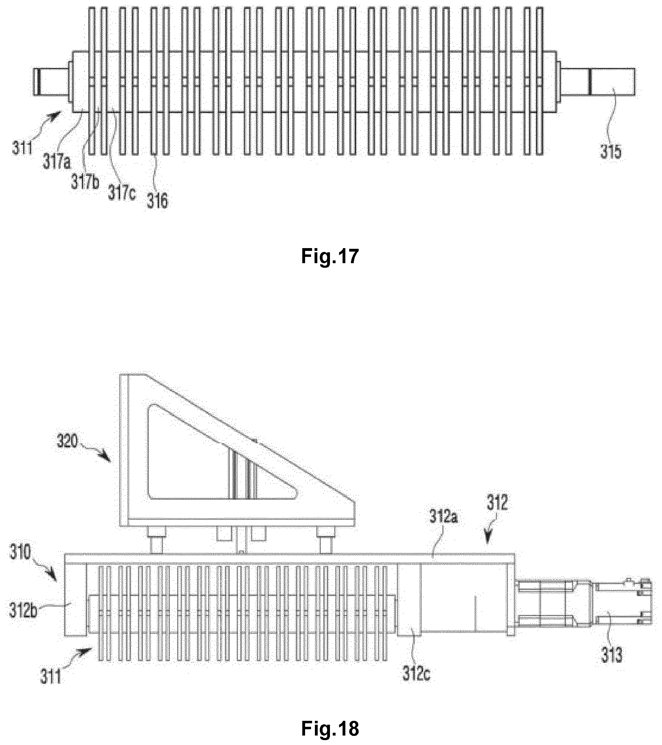

As illustrated in FIG. 17, the blades 316 and the spacers 317 are then re-engaged sequentially with the shaft 315 in a predetermined order by means of the second spacers 317b and the third spacers 317c having the widths corresponding to the width and arrangement gap of the support plates 410 in the cutting machine which is to perform the slag removal operation.

As illustrated in FIG. 18, the scraper 311 with the exchanged second and third spacers 317b and 317c is then re-engaged with the support frame 312.

As described above, the arrangement gap of the blades 316 is controllable by exchanging the spacers 317 in the slag removal apparatus 300, thereby making it possible to apply the slag removal apparatus 300 to support plates 410 conforming to various standards, with compatibility.

The driving member 313 provides driving force to rotate the scraper 311. This driving member 313 is preferably, but not limited to, a motor. The driving member 313 is fixed to a motor support plate 312d provided on one side of the support frame 312. Thus, the driving member 313 may rotate the shaft 315 and the blades 316 engaged with the shaft 315.

The torque sensor 314 is axially engaged with a rotation shaft of the driving member 313. Therefore, the torque sensor 314 may measure rotation load applied to the rotation shaft of the scraper 311 and/or the driving member 313. The measured rotation load may be input to the controller 360.

However, the rotation load measured by the torque sensor 314 may vary according to the amount and bonding force of slag attached to the support plates 410. That is, as the amount of the slag attached to the support plates 410 or the bonding force of the slag increases, the rotation load increases proportionally. Accordingly, when the slag removal operation is performed with a high rotation load measurement, slag attached to a specific part of the support plates 410, in which the high rotation load is measured may partially remain or the blades 316 or other components of the slag removing unit 310 may be damaged.

To overcome the problem, when the rotation load measurement is higher than a predetermined threshold, the controller 360 may transfer the slag removing unit 310 by the later-described transfer unit 320 to repeat the slag removal operation two or more times on the specific part of the support plates 410, in which the high rotation load is measured, or may stop the driving member 313 of the slag removing unit 310 to discontinue the slag removal operation.

For example, when the rotation load measurement is higher than a predetermined first threshold, the controller 360 may retreat the slag removing unit 310 by a second transferer 324 of the later-described transfer unit 320 and repeat the slag removal operation two or more times on the specific part of the support plates 410, in which the high rotation load is measured.

For example, when the rotation load measurement is higher than a predetermined second threshold, the controller 360 may stop the driving member 313 of the slag removing unit 310 to discontinue the slag removal operation. The second threshold is preferably higher than the first threshold, which should not be construed as limiting.

The torque sensor 314 has been described as axially engaged with the rotation shaft of the driving member 313, which should not be construed as limiting. That is, the torque sensor 314 may be axially engaged with the shaft 315.

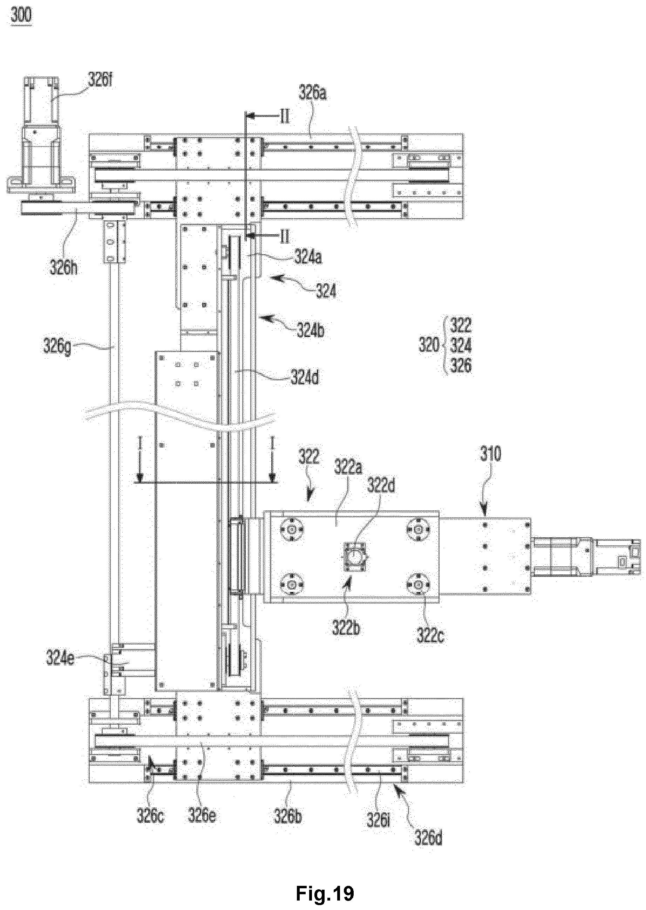

FIG. 19 is a plan view illustrating the slag removal apparatus illustrated in FIG. 8.

The transfer unit 320 is provided to transfer the slag removing unit 310 along three-axis directions. For this purpose, the transfer unit 320 includes a first transferer 322 transferring the slag removing unit 310 in the height direction of the support plates 410, a second transferer 324 transferring the slag removing unit 310 in the length direction of the support plates 410, and a third transferer 326 transferring the slag removing unit 310 in the width direction of the support plates 410.

As illustrated in FIG. 15, the first transferer 322 may include a first bracket 322a, a first transfer member 322b, and first guide members 322c.

A transfer member available as the first transfer member 322b is not limited to any specific type. For example, the first transfer member 322b may include an air cylinder 322d in which a cylinder rod 322e is installed to make a translational motion in the height direction of the support plates 410. In this case, the first transfer member 322b may be fixed to the first bracket 322a, and the cylinder rod 322e may penetrate through the first bracket 322a and be engaged with the body 312a of the support frame 312. This first transfer member 322b may reciprocally transfer the slag removing unit 310 in the height direction of the support plates 410.

Each of the first guide members 322c may have one end fixed to the body 312a of the support frame 312 and the other end mounted in the first bracket 32ea, to move in the height direction of the support plates 410. Therefore, the first guide members 322c may guide transfer of the slag removing unit 310 in the height direction of the support plates 410, when the first transfer member 322b is driven.

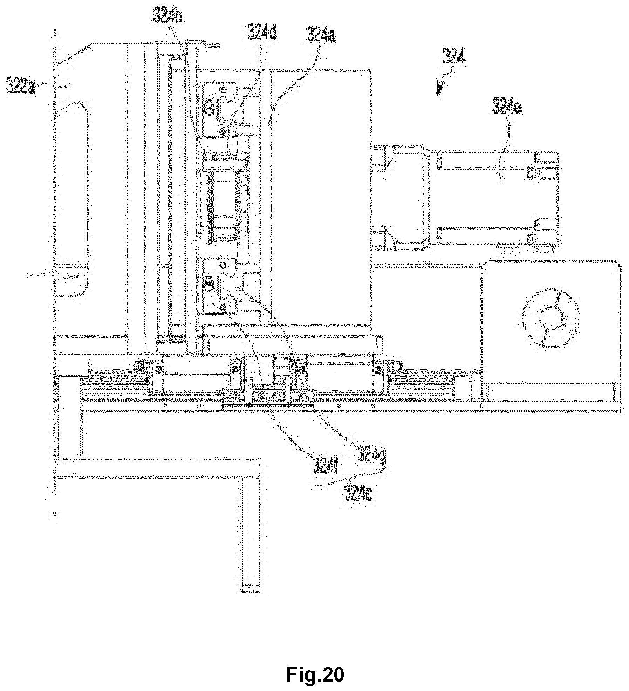

FIG. 20 is a sectional view illustrating the slag removal apparatus illustrated in FIG. 19, taken along line I-I.

As illustrated in FIGS. 19 and 20, the second transferer 324 may include a second housing 324a, a second transfer member 324b, and second guide members 324c.

The second housing 324a is disposed to extend along the length direction of the support plates 410 and provide a space in which the components of the second transferer 324 are accommodated.

A transfer member available as the second transfer member 324b is not limited to any specific type. For example, the second transfer member 324b may include a second transfer belt 324d and a second driving motor 324e.

The second transfer belt 324d is installed in the second housing 324a, to extend in the length direction of the support plates 410. The second driving motor 324e may be axially engaged with a pulley at one side of the second transfer belt 324d. Further, the second transfer belt 324d is engaged with the first bracket 322a of the first transferer 322 by a fixing tip 324h. Thus, the second transfer belt 324d may reciprocally transfer the first transferer 322 and the slag removing unit 310 engaged with the first transferer 322 along the length direction of the support plates 410 according to a rotational direction of the second driving motor 324e.

Each of second guide members 324c may include a second linear rail 324f extending along the length direction of the support plates 410 in the second housing 324a, and a second guide block 324g engaged with the second linear rail 324f, movably along the length direction of the support plates 410. The second guide members 324c may guide transfer of the first transferer 322 and the slag removing unit 310 engaged with the first transferer 322 along the length direction of the support plates 410, when the second transfer members 324b are driven.

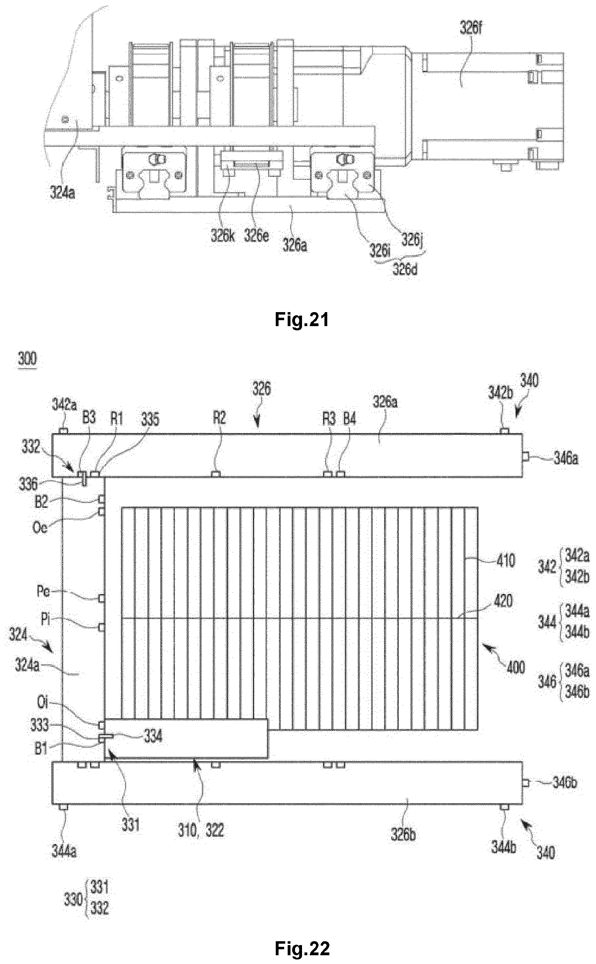

FIG. 21 is a sectional view illustrating the slag removal apparatus illustrated in FIG. 19, taken along line II-II.

The third transferer 326 may include third housings 326a and 326b, third transfer members 326c, and third guide members 326d.

There are preferably a pair of third housings 326a and 326b. The pair of third housings 326a and 326b are disposed to extend along the width direction of the support plates 410, with the second transferer 324 interposed between the housings 326a and 326b. Each of the third housings 326a and 326b provides a space in which components of the third transferer 326 are installed.

One third transfer member 326c is installed in each of the third housings 326a and 326b. A transfer member available as the third transfer member 326c is not limited to any specific type. For example, the third transfer member 326c may include a third transfer belt 326e and a third driving motor 326f.

The third transfer belts 326e are installed in the third housings 326a and 326b, to extend in the width direction of the support plates 410. A pulley on one side of the third transfer belt 326e installed in the third housing 326a is coupled to a pulley on one side of the third transfer belt 326e installed in the third housing 326b by means of a connection shaft 326g, for interworking. Further, the connection shaft 326g is coupled to the third motor 326f by a connection belt 326h. For this purpose, the third driving motor 326f is axially coupled to a pulley on one side of the connection belt 326h, and the connection shaft 326g is axially coupled to a pulley on the other side of the connection belt 326h. Therefore, when the third driving motor 326f rotates, the third transfer belts 326e may rotate simultaneously.

Further, each of the third transfer belts 326e is coupled to one of both ends of the second housing 324a by a fixing tip 326k. Hence, each third transfer belt 326e may reciprocally transfer the second transferer 324, and the first transferer 322 and the slag removing unit 310 which are coupled to the second transferer 324 in the width direction of the support plates 410 according to a rotational direction of the third driving motor 326f.

Each of the third guide members 326d may include a third linear rail 326i extending in the width direction of the support plates 410, and a third guide block 326j coupled to the third linear rail 326i, movably in the width direction of the support plates 410, in the third housing 326a or 326b. The third guide members 326d may guide transfer of the second transferer 324, and the first transferer 322 and the slag removing unit 310 which are coupled to the second transferer 324 along the width direction of the support plates 410.

FIG. 22 is a diagram illustrating installation of a position sensing unit and an obstacle sensing unit illustrated in FIG. 9.

The position sensing unit 330 may include a first sensor 331 and a second sensor 332.

The first sensor 331 is provided to sense the position of the slag removing unit 310 in the length direction of the support plates 410. For this purpose, the first sensor 331 may include a plurality of first position sensors 333 and a first position sensing bar 334.

Each of the position sensors 333 may be installed at a predetermined position in the second housing 324a of the second transferer 324. For example, the first position sensors 333 may be installed at a transfer bound point B 1, an operation starting point Oi, a pass starting point Pi, a pass ending point Pe, an operation ending point Oe, and a second transfer bound point B2.

The first transfer bound point B 1 is a transfer limit point of the second transferer 324 in the length direction of the support plates 410, corresponding to an initial position of the first transferer 322. The first transfer boundary point B1 is preferably set such that the first transferer 322 and the slag removing unit 310 are spaced from the third housing 326b by a predetermined distance. Therefore, collision of the first transferer 322 and the slag removing unit 310 against the third transferer 326 may be prevented.

The operation starting point Oi corresponds to a point at which the slag removal operation for the support plates 410 starts. The operation starting point Oi is set to, preferably, but not limited to, a position corresponding to one end of each support plate 410 close to the first transfer boundary point B1.

The pass starting point Pi corresponds to a point at which the blades 316 start to skip the gap maintaining plates 420 of the support plate assembly 400. The pass starting point Pi is set to, preferably, but not limited to, a position spaced from the installation position of the gap maintaining plates 420 toward the operation starting point Oi by a predetermined distance.

The pass ending point Pe corresponds to a point at which the blades 316 end the operation of skipping the gap maintaining plates 420 of the support plate assembly 400. The pass ending point Pe is set to, preferably, but not limited to, a position opposite to the operation starting point Oi, that is, a position spaced from the installation position of the gap maintaining plates 420 toward the operation ending point Oe by a predetermined distance.

As many pass starting points Pi as the number of gap maintaining plates 420 and as many pass ending points Pe as the number of gap maintaining plates 420 may be set at an interval identical to the arrangement gap of the gap maintaining plates 420.

The operation ending point Oe corresponds to a point at which the slag removal operation for the support plates 410 ends. The operation ending point Oe is set to, preferably but not limited to, a position corresponding to the other end of each support plate 410 opposite to the first transfer boundary point B1, that is, close to the second transfer boundary point B2 by a predetermined distance.

The second transfer boundary point B2 is a transfer limit point of the first transferer 322 in the length direction of the support plates 410. The second transfer boundary point B2 corresponds to a switching reference point at which the transfer direction of the first transferer 322 switches to a direction to the first transfer boundary point B1. The second transfer boundary point B2 is set to, preferably, but not limited to, a position at which the first transferer 322 and the slag removing unit 310 are spaced from the other third housing 326a by a predetermined distance or more. Therefore, collision of the first transferer 322 and the slag removing unit 310 against the third transferer 326 may be prevented.

Sensors available as the first position sensors 333 are not limited to any specific type. Each of the first position sensors 333 may be any of various sensors capable of detecting entry of the first position sensing bar 324 into a predetermined sensing range.

The first position sensing bar 334 may be installed at a predetermined position in the first bracket 322a, so that the first transferer 322 and the slag removing unit 310 engaged with the first transferer 322 may sequentially pass through the first position sensors 333 during movement in the length direction of the support plates 410 by the second transferer 324. Hence, each of the first position sensors 333 may sense the position of the first transferer 322 and the slag removing unit 310 engaged with the first transferer 322 in the length direction of the support plates 410 through the first position sensing bar 334 and then input the sensed position to the controller 360.

The second sensor 332 is provided to sense the position of the slag removing unit 310 in the width direction of the support plates 410. For this purpose, the second sensor 332 may include a plurality of second position sensors 335 and a second position sensing bar 336.

The second position sensors 335 may be installed at predetermined positions in the third housings 326a and 326b of the third transferer 326. For example, the second position sensors 335 may be installed at a third transfer boundary point B3, operation reference points R1, R2 and R3, and a fourth transfer boundary point B4.

The third transfer boundary point B3 is a transfer limit point for the third transferer 326 in the width direction of the support plates 410, corresponding to an initial position of the second transferer 324. The third transfer boundary point B3 is preferably set such that the second transferer 324, and the first transferer 322 and the slag removing unit 310 which are engaged with the second transferer 324 are spaced from one end of each of the third housings 326a and 326b by a predetermined distance, which should not be construed as limiting. Therefore, collision of the second transferer 324, and the first transferer 322 and the slag removing unit 310 which are engaged with the second transferer 324 against an obstacle near to the slag removal apparatus 300 may be prevented.

The operation reference points R1, R2 and R3 correspond to reference points at which support plates 410 are designated for simultaneous slag removal through the scraper 311 from among the total support plates 410. The scraper 311 is provided with a plurality of blades 316 to remove slag from a plurality of support plates 410. Therefore, the operation reference points R1, R2 and R3 are set at, preferably but not limited to, an interval equal to the sum of the arrangement gaps of all support plates 410 from which slag may be removed at the same time by means of the scraper 311. For example, when the scraper 311 is configured to simultaneously remove slag from eight support plates 410, the operation reference points R1, R2 and R3 may be set at the same interval as the sum of the arrangement gaps of eight support plates 410.

The fourth transfer boundary point B4 is a transfer limit for the third transferer 326 in the width direction of the support plates 410, corresponding to a switching reference point at which the transfer direction of the second transferer 324 switches to the direction to the third transfer boundary point B3. The fourth transfer boundary point B4 is preferably set such that the second transferer 324, and the first transferer 322 and the slag removing unit 310 which are engaged with the second transferer 324 are spaced from the other end of each of the third housings 326a and 326b by a predetermined distance, which should not be construed as limiting. Therefore, collision of the second transferer 324, and the first transferer 322 and the slag removing unit 310 which are engaged with the second transferer 324 against an obstacle near to the slag removal apparatus 300 may be prevented.

The second position sensing bar 336 may be installed at a predetermined position in the second housing 324a of the second transferer 324, such that the second transferer 324, and the first transferer 322 and the slag removing unit 310 which are engaged with the second transferer 324 may sequentially pass through the second position sensors 335 during movement in the width direction of the support plates 410 by the third transferer 326. For example, when the second position sensors 335 are installed in each of the third housings 326a and 326b as illustrated in FIG. 22, a second position sensing bar 336 may be installed at each of both ends of the second housing 324a. Hence, the second position sensors 335 may sense the positions of the second transferer 324, and the first transferer 322 and the slag removing unit 310 which are engaged with the second transferer 324 in the width direction of the support plates 410 through the second position sensing bars 336 and input the sensed positions to the controller 360.

The obstacle sensing unit 340 is a device that senses approach of an operator or any other obstacle to the slag removal apparatus 300. For this purpose, the obstacle sensing unit 340 may include a plurality of obstacle sensors 342, 344, and 346.

Each of the obstacle sensors 342, 344, and 346 may be installed at a predetermined position to sense entry of an operator or any other obstacle in paths running to the slag removing unit 310.

For example, at least a part 342 and 344 of the obstacle sensors 342, 344, and 346 may be installed on surfaces of the third housings 326a and 326b, which face in the side directions of the slag removal apparatus. Therefore, the obstacle sensors 342 and 344 may sense approach of an obstacle from the side directions of the slag removal apparatus 300.

For example, at least a part 346 of the obstacle sensors 342, 344 and 346 may be installed on another surface of each of the third housings 326a and 326b facing in the front or rear direction of the slag removal apparatus 300. As illustrated in FIG. 22, when the slag removing unit 310 is installed in the second transferer 324, facing in the rear direction of the slag removal apparatus 300, an obstacle may approach the slag removing unit 310 through the gap between the third housings 326a and 326b from the rear direction of the slag removal apparatus 300. In this case, the obstacle sensor 346 is installed on, preferably but not limited to, the surface of each of the third housings 326a and 326b, facing in the rear direction of the slag removal apparatus 300.

Sensors available as the obstacle sensors 342, 344 and 346 are not limited to any specific type. For example, each of the obstacle sensors 342, 344 and 346 may be configured as a photosensor including a light emitting element 342a, 344a, or 346a outputting an optical signal, and a light receiving element 342b, 344b or 346b. In this case, the waveforms of optical signals received at the light receiving elements 342b, 344b and 346b vary depending on how an obstacle approaches, and the light receiving elements 342b, 344b and 346b convert the optical signals received from the light emitting elements 342a, 344a and 346a to electrical signals, that is, obstacle sensing signals and input the obstacle sensing signals to the controller 360. Therefore, the controller 360 may determine whether an obstacle is approaching based on the obstacle sensing signals received from the light receiving elements 342b, 344b and 346b.

The communication module 350 is provided to implement Internet of things (IoT) enabling remote control of the slag removal apparatus 300 by using a Web site, an application, or the like dedicated to the slag removal apparatus 300. For this purpose, the communication module 350 may include a communication member for connecting the slag removal apparatus 300 to an external server or a terminal wiredly or wirelessly, for example, by wireless fidelity (WiFi) or Bluetooth. The communication module 350 may input a signal received from the external server or the terminal to the controller 360 or transmit a signal received from the controller 360 to the external server or the terminal, thereby remotely operating the slag removal apparatus 300. Hence, a plurality of slag removal apparatuses 300 may be managed by small personnel, thereby increasing productivity. Further, the operator may be protected against damage from the slag removal apparatus 300.

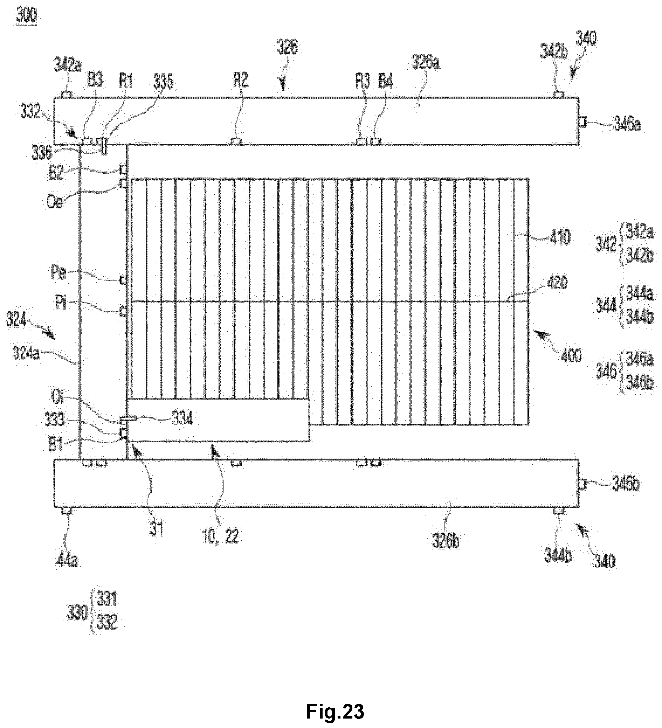

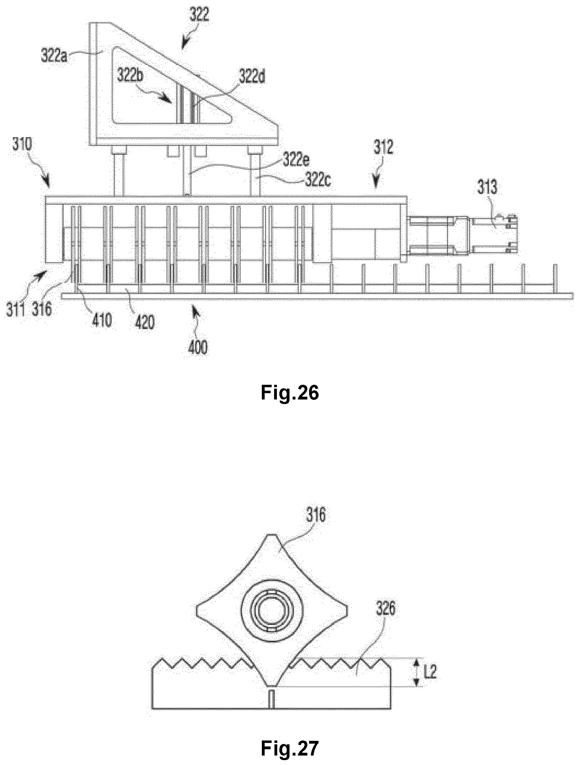

FIGS. 23 to 32 are diagrams illustrating a method of removing slag by the slag removing unit.

With reference to the related drawings, the method of removing slag by the slag removal apparatus 300 will be described below.

As illustrated in FIG. 22, with the slag removing unit 310 placed at the initial position (with the slag removing unit 310 placed at the first transfer boundary point B 1 in the length direction of the support plates 410 and at the third transfer boundary point B3 in the width direction of the support plates 410), the controller 360 may prepare to operate the slag removal apparatus 300.

As illustrated in FIG. 23, the controller 360 may then operate the second transferer 324 and the third transferer 326 to transfer the slag removing unit 310 in the length and width directions of the support plates 410, so that the slag removing unit 310 may be placed at the operation starting point Oi in the length direction of the support plates 410 and at the first operation reference point R1 among the operation reference points R1, R2 and R3 in the width direction of the support plates 410.

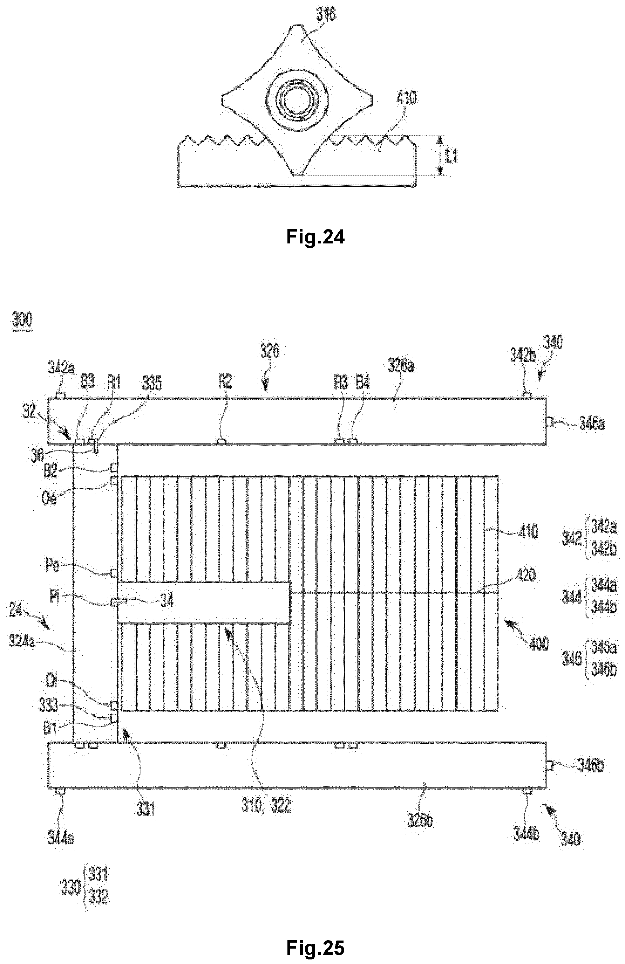

Subsequently, as illustrated in FIGS. 15 and 24, the controller 360 may lower the slag removing unit 310 in the height direction of the support plates 410 by operating the first transferer 322, so that each of the support plates 410 may be inserted to a first depth L1 between blades 316.

The controller 360 may then transfer the slag removing unit 310 toward the operation ending point Oe by driving the second transferer 324, together with rotation of the blades 316 by operating the driving member 313 of the slag removing unit 310. Then, the blades 316 may remove slag attached to both side surfaces of the support plates 410 by scraping out the slag.

Subsequently, as illustrated in FIGS. 25, 26 and 27, when the slag removing unit 310 reaches the pass starting point Pi, the controller 360 may raise the slag removing unit 310 in the height direction of the support plates 410 by operating the first transferer 322, so that each of the support plates 410 may be inserted to a second depth L2 smaller than the first depth L1 between blades 316. The second depth L2 is not limited to any specific value. The second depth L2 is set to a value that enables slag removal by allowing the blades 316 to proceed at a position higher than the gap maintaining plate 420 by a predetermined height, when the blades 316 pass the installation position of the gap maintaining plate 420. That is, the second depth L2 is determined such that when the blades 316 pass the installation position of the gap maintaining plate 420, the blades 316 are spaced from the gap maintaining plate 420 by a predetermined gap. Therefore, the controller 360 may prevent the blades 316 and the gap maintaining plate 420 from colliding each other and thus damaging the slag removal apparatus 300 and the support plates 410.

Subsequently, as illustrated in FIGS. 15 and 24, when the slag removing unit 310 reaches the pass ending point Pe, the controller 360 may lower the slag removing unit 310 in the height direction of the support plates 410 by operating the first transferer 322 so that each support plate 410 may be inserted again to the first depth L1 between blades 316.

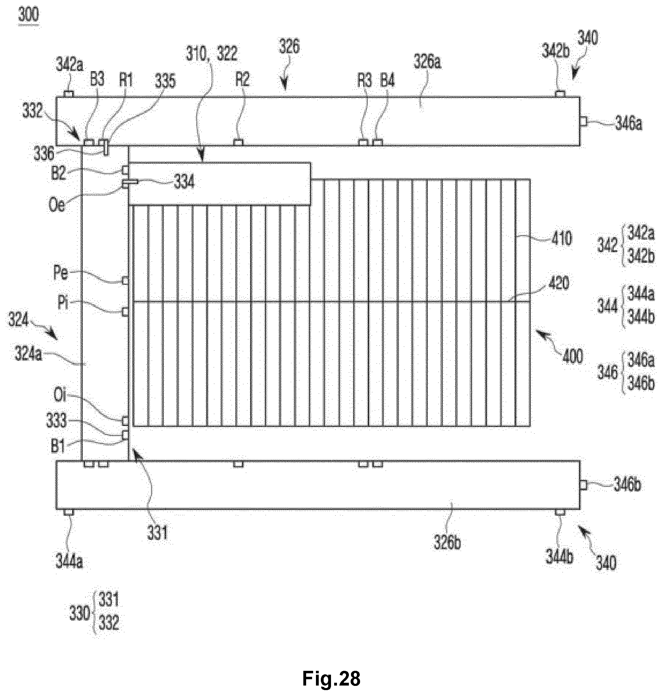

Subsequently, as illustrated in FIG. 28, when the slag removing unit 310 reaches the operating ending point Oe, the controller 360 may stop the driving member 313 of the slag removing unit 310. Therefore, the slag removal operation for the support plates 410 corresponding to the first operation reference point R1 among the operation reference points R1, R2 and R3 may end. The controller 360 may raise the slag removing unit 310 by operating the first transferer 322 to withdraw each of the support plates 410 from between blades 316.

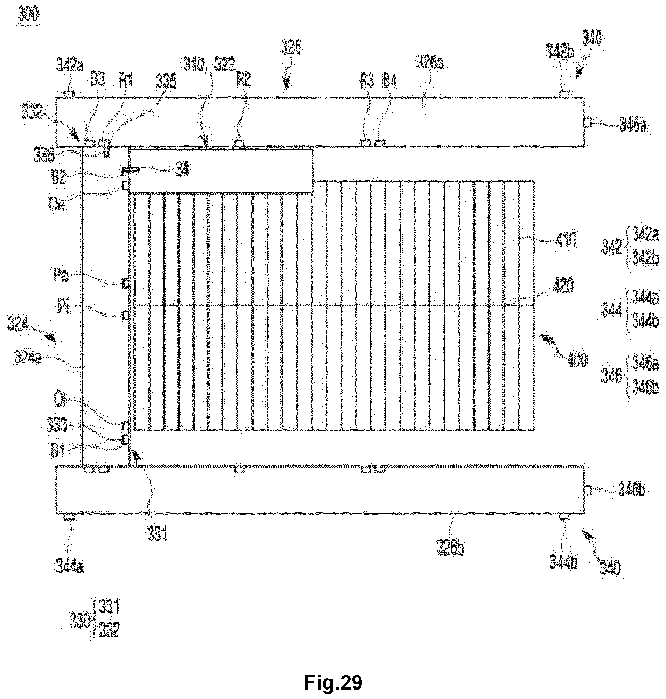

Subsequently, as illustrated in FIG. 29, when the slag removing unit 310 reaches the second transfer boundary point B2, the controller 360 may return the slag removing unit 310 to the operation starting point Oi or the first transfer boundary point B1 by operating the second transferer 324 in a reverse direction.

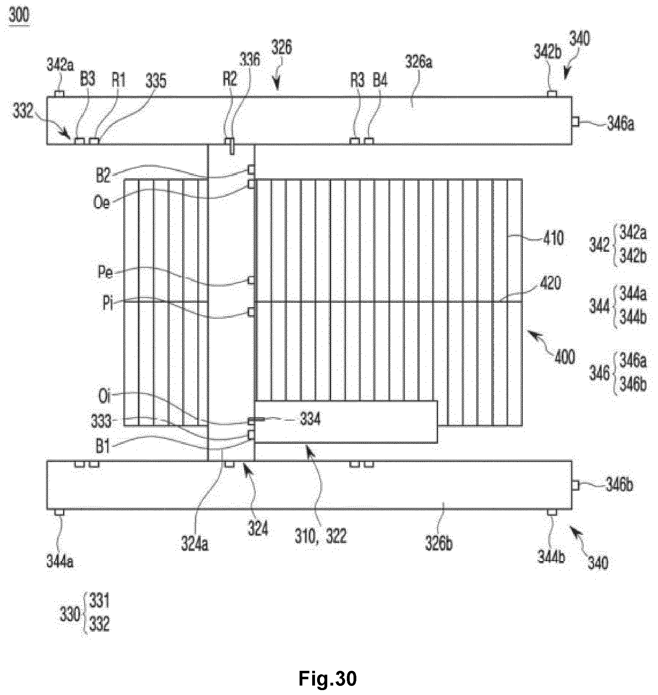

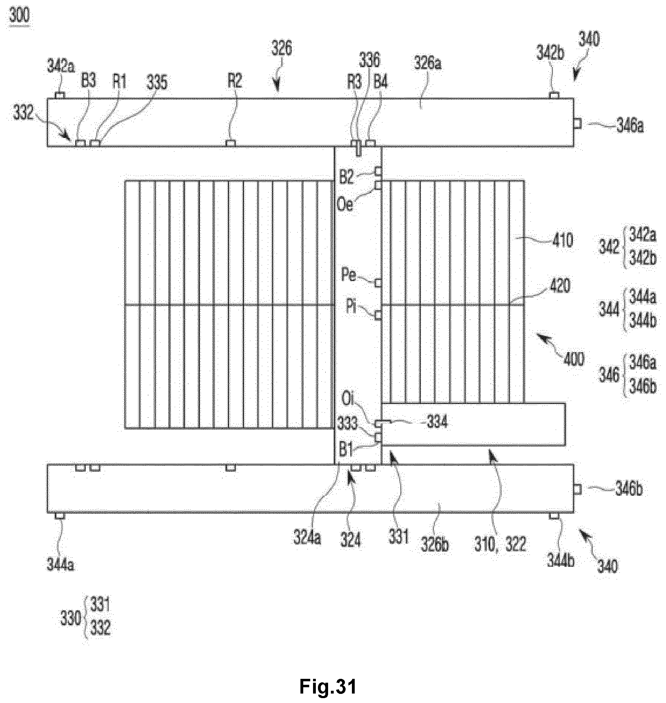

Subsequently, as illustrated in FIGS. 30 and 31, the controller 360 may operate the slag removing unit 310 and the transferers 320 to sequentially perform the slag removal operation for support plates 410 corresponding to each of the remaining operation reference points R2 and R3 among the operation reference points R1, R2 and R3.

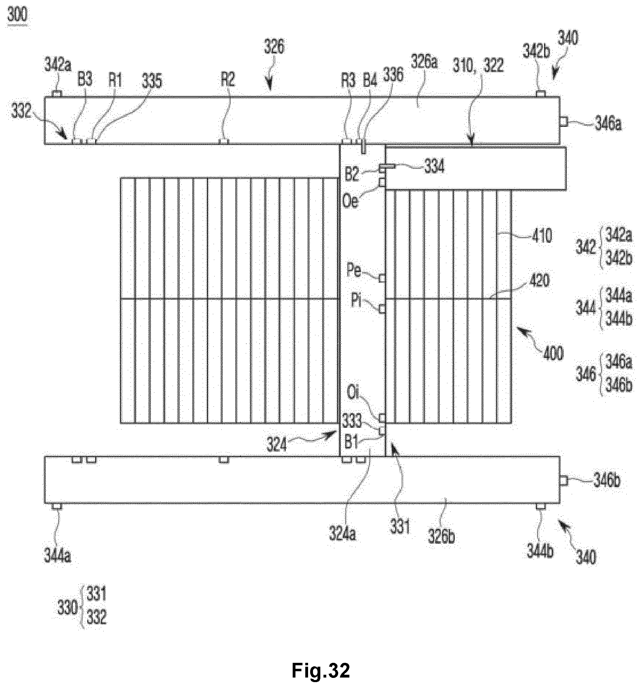

Subsequently, as illustrated in FIG. 32, when the slag removing unit 310 reaches a return position (i.e., when the slag removing unit 310 reaches the second transfer boundary point B2 in the length direction of the support plates 410 and the fourth transfer boundary point B4 in the width direction of the support plates 410), the controller 360 may return the slag removing unit 310 to its initial position by operating the second transferer 324 and the third transferer 326.

## Claims

1. A slag removal apparatus for removing slag from support plates (11) provided to support an object to be processed in a cutting machine, the slag removal apparatus comprising:
a scraper (110, 210, 311) including a plurality of blades (112, 212, 316) around an outer surface of a bar (111, 211, 334) crossing the support plates, and a plurality of slots (113, 213) formed in the respective blades (112, 212, 316) along a length direction and thus formed around the bar (111, 211, 334) and in a length direction of the bar;
a rotation support unit (120, 220) to which the scraper (110, 210, 311) is rotatably installed;
a rotation driving unit (130, 203) configured to rotate the scraper (110, 210, 311) from the rotation support unit (120, 220) to remove slag attached to the support plates by the blades (112, 212, 316);
a lifting unit (140) configured to lower the scraper (110, 210, 311) for insertion of the support plates into the slots and removing the slag, and to raise the scraper (110, 210, 311) to an original position by raising and lowering the rotation support unit (120, 220);
a first transfer unit (150) configured to move the rotation support unit (120, 220) along a length direction of the support plates to allow the scraper (110, 210, 311) to remove the slag along the length direction of the support plates (11).

2. The slag removal apparatus according to claim 1, wherein the blades (113) are formed to be straight in a radius direction from the bar (111) in the scraper (110).

3. The slag removal apparatus according to claim 1, wherein the blades (212) are formed to be curved in a radius direction from the bar (211) in the scraper (210).

4. The slag removal apparatus according to one of claims 1 to 3, wherein a plurality of scrapers (110, 210, 311) are arranged in parallel and installed to be rotated by the rotation driving unit, in the rotation support unit.

5. The slag removal apparatus according to claim 4, wherein the blades (112, 212) of one of the plurality of scrapers (110, 210, 311) are formed to be straight in a radius direction from the bar (111, 211), and the blades (112, 212) of another of the plurality of scrapers (110, 210, 311) are formed to be curved in the radius direction from the bar (111, 211).

6. The slag removal apparatus according to any of claims 1 to 5, wherein the lifting unit (140) comprises:
a transfer member (141) installed to move in the length direction by the first transfer unit;
a lifting guide (142) configured to guide upward and downward movement of the rotation support unit to and from the transfer member (141); and
a lifting driver (143) configured to raise and lower the rotation support unit to and from the transfer member.

7. The slag removal apparatus according to any of claims 1 to 6 wherein the first transfer unit (150) comprises:
a first transfer frame (151) supporting the lifting unit (140), for movement of the lifting unit (140) in the length direction;
a first transfer guide (152) configured to guide movement of the lifting unit (140) along the length direction on the first transfer frame (151); and
a first transfer driver (153) configured to reciprocally move the lifting unit (140) in the length direction on the first transfer frame (151).

8. The slag removal apparatus according to one of claims 1 to 7, further comprising a second transfer unit (160) configured to move the rotation support unit (120, 220) in a transverse direction of the support plates,
wherein the second transfer unit comprises (160):
a second transfer frame (161) supporting the first transfer unit (150), for movement of the first transfer unit in (150) the transverse direction;
a second transfer guide (162) configured to guide movement of the first transfer unit (150) along the transverse direction; and
a second transfer driver (163) configured to reciprocally move the first transfer unit (150) in the transverse direction on the second transfer frame (161).

9. The slag removal apparatus according to any of claims 1 to 5, further comprising a second transfer unit (160) moving the rotation support unit in a transverse direction of the support plates,
wherein the second transfer unit (160) comprises:
a second transfer frame supporting the lifting unit (140), for movement of the lifting unit in the transverse direction;
a second transfer guide guiding movement of the lifting unit along the transverse direction on the first transfer frame; and
a second transfer driver reciprocally moving the lifting unit in the transverse direction on the second transfer frame, and
wherein the first transfer unit (150) comprises:
a first transfer frame supporting the second transfer unit, for movement of the second transfer unit (160) in the length direction;
a first transfer guide guiding movement of the second transfer unit along the length direction on the first transfer frame; and
a first transfer driver reciprocally moving the second transfer unit in the length direction on the first transfer frame.

10. A cutting machine, comprising
support plates (11) configured to support an object to be processed in the cutting machine; and
a slag removal apparatus according to one of claims 1 to 9 for removing slag from the support plates (11) by the scraper (110, 210, 311).

## Patentansprüche

1. Schlackenentfernungsvorrichtung zum Entfernen von Schlacke von Trägerplatten (11), die zum Tragen eines in einer Schneidmaschine zu bearbeitenden Objekts vorgesehen sind, wobei die Schlackenentfernungsvorrichtung umfasst:
einen Abstreifer (110, 210, 311), der eine Vielzahl von Klingen (112, 212, 316) um eine äußere Oberfläche eines Stabes (111, 211, 334), der die Trägerplatten kreuzt, und eine Vielzahl von Schlitzen (113, 213) aufweist, die in den jeweiligen Klingen (112, 212, 316) entlang einer Längsrichtung ausgebildet sind und somit um den Stab (111, 211, 334) und in einer Längsrichtung des Stabes ausgebildet sind;
eine Drehträgereinheit (120, 220), an der der Abstreifer (110, 210, 311) drehbar angebracht ist;
eine Drehantriebseinheit (130, 203), die dazu konfiguriert ist, den Abstreifer (110, 210, 311) von der Drehträgereinheit (120, 220) zu drehen, um an den Trägerplatten haftende Schlacke durch die Klingen (112, 212, 316) zu entfernen;
eine Hebeeinheit (140), die dazu konfiguriert ist, den Abstreifer (110, 210, 311) zum Einsetzen der Trägerplatten in die Schlitze und zum Entfernen der Schlacke abzusenken und den Abstreifer (110, 210, 311) in eine ursprüngliche Position anzuheben durch Anheben und Absenken der Drehträgereinheit (120, 220);
eine erste Transfereinheit (150), die dazu konfiguriert ist, die Drehträgereinheit (120, 220) entlang einer Längsrichtung der Trägerplatten zu bewegen, damit der Abstreifer (110, 210, 311) die Schlacke entlang der Längsrichtung der Trägerplatten (11) entfernen kann.

2. Schlackenentfernungsvorrichtung nach Anspruch 1, wobei die Klingen (113) so geformt sind, dass sie in einer Radiusrichtung von dem Stab (111) im Abstreifer (110) gerade sind.

3. Schlackenentfernungsvorrichtung nach Anspruch 1, wobei die Klingen (212) so geformt sind, dass sie in einem Radius von dem Stab (211) im Abstreifer (210) gekrümmt sind.

4. Schlackenentfernungsvorrichtung nach einem der Ansprüche 1 bis 3, wobei eine Vielzahl von Abstreifern (110, 210, 311) parallel zueinander angeordnet und so installiert sind, dass sie von der Drehantriebseinheit in der Drehträgereinheit gedreht werden.

5. Schlackenentfernungsvorrichtung nach Anspruch 4, wobei die Klingen (112, 212) eines der Vielzahl von Abstreifern (110, 210, 311) so geformt sind, dass sie in einer Radiusrichtung von dem Stab (111, 211) gerade sind, und die Klingen (112, 212) eines anderen der Vielzahl von Abstreifern (110, 210, 311) so geformt sind, dass sie in der Radiusrichtung von dem Stab (111, 211) gekrümmt sind.

6. Schlackenentfernungsvorrichtung nach einem der Ansprüche 1 bis 5, wobei die Hebeeinheit (140) Folgendes umfasst:
ein Transferelement (141), das so installiert ist, um sich durch die erste Transfereinheit in der Längsrichtung zu bewegen;
eine Hebeführung (142), die dazu konfiguriert ist, die Aufwärts- und Abwärtsbewegung der Drehträgereinheit zu und von dem Transferelement (141) zu führen; und
einen Hebeantrieb (143), der dazu konfiguriert ist, die Drehträgereinheit auf das Transferelement zu heben und von diesem abzusenken.

7. Schlackenentfernungsvorrichtung nach einem der Ansprüche 1 bis 6, wobei die Transfereinheit (150) Folgendes umfasst:
einen ersten Transferrahmen (151), der die Hebeeinheit (140) trägt, um die Hebeeinheit (140) in der Längsrichtung zu bewegen;
eine erste Transferführung (152), die dazu konfiguriert ist, die Bewegung der Hebeeinheit (140) entlang der Längsrichtung auf dem ersten Transferrahmen (151) zu führen; und
einen ersten Transferantrieb (153), der dazu konfiguriert ist, die Hebeeinheit (140) in der Längsrichtung auf dem ersten Transferrahmen (151) hin- und her zu bewegen.

8. Schlackenentfernungsvorrichtung nach einem der Ansprüche 1 bis 7, ferner umfassend eine zweite Transfereinheit (160), die dazu konfiguriert ist, die Drehträgereinheit (120, 220) in einer Querrichtung der Trägerplatten zu bewegen,
wobei die zweite Transfereinheit (160) Folgendes umfasst:
einen zweiten Transferrahmen (161), der die erste Transfereinheit (150) trägt, um die erste Transfereinheit (150) in der Querrichtung zu bewegen;
eine zweite Transferführung (162), die dazu konfiguriert ist, die Bewegung der ersten Transfereinheit (150) entlang der Querrichtung zu führen; und
einen zweiten Transferantrieb (163), der dazu konfiguriert ist, die erste Transfereinheit (150) in der Querrichtung auf dem zweiten Transferrahmen (161) hin- und her zu bewegen.

9. Schlackenentfernungsvorrichtung nach einem der Ansprüche 1 bis 5, ferner umfassend eine zweite Transfereinheit (160), welche die Drehträgereinheit in einer Querrichtung der Trägerplatten bewegt,
wobei die zweite Transfereinheit (160) Folgendes umfasst:
einen zweiten Transferrahmen, der die Hebeeinheit (140) trägt, um die Hebeeinheit in der Querrichtung zu bewegen;
eine zweite Transferführung, welche die Bewegung der Hebeeinheit entlang der Querrichtung auf dem ersten Transferrahmen führt; und
einen zweiten Transferantrieb, der die Hebeeinheit in der Querrichtung auf dem zweiten Transferrahmen hin- und herbewegt, und
wobei die erste Transfereinheit (150) Folgendes umfasst:
einen ersten Transferrahmen, der die zweite Transfereinheit trägt, um die zweite Transfereinheit (160) in der Längsrichtung zu bewegen;
eine erste Transferführung, welche die Bewegung der zweiten Transfereinheit entlang der Längsrichtung auf dem ersten Transferrahmen führt; und
einen ersten Transferantrieb, der die zweite Transfereinheit in der Längsrichtung auf dem ersten Transferrahmen hin- und herbewegt.

10. Schneidmaschine, umfassend:
Trägerplatten (11), die dazu konfiguriert sind, ein in der Schneidmaschine zu bearbeitendes Objekt zu tragen; und
eine Schlackenentfernungsvorrichtung nach einem der Ansprüche 1 bis 9 zum Entfernen von Schlacke von den Trägerplatten (11) durch den Abstreifer (110, 210, 311).

## Revendications

1. Un appareil d'enlèvement de scories permettant d'enlever des scories des plaques de support (11) conçu pour supporter un objet à traiter dans une machine de découpe, l'appareil d'enlèvement de scories comprenant:
un racloir (110, 210, 311) comprenant une pluralité de lames (112, 212, 316) autour d'une surface extérieure d'une barre (111, 211, 334) traversant les plaques de support, et une pluralité de fentes (113, 213) formées dans les lames respectives (112, 212, 316) le long d'une direction longitudinale et ainsi formées autour de la barre (111, 211, 334) et dans une direction longitudinale de la barre;
une unité de support de rotation (120, 220) sur laquelle le racloir (110, 210, 311) est installé de manière rotative;
une unité d'entraînement en rotation (130, 203) conçue pour mettre en rotation le racloir (110, 210, 311) à partir de l'unité de support de rotation (120, 220) de manière à permettre l'enlèvement des scories fixées aux plaques de support par les lames (112, 212, 316);
une unité d'élévation (140) conçue pour abaisser le racloir (110, 210, 311) de manière à permettre l'insertion des plaques de support dans les fentes et l'enlèvement des scories, et pour soulever le racloir (110, 210, 311) dans une position d'origine en soulevant et en abaissant l'unité de support de rotation (120, 220);
une première unité de transfert (150) conçue pour déplacer l'unité de support de rotation (120, 220) le long d'une direction longitudinale des plaques de support de manière à permettre au racloir (110, 210, 311) d'enlever les scories le long de la direction longitudinale des plaques de support (11).

2. L'appareil d'enlèvement de scories selon la revendication 1, dans lequel les lames (113) sont formées de manière à être droites dans une direction radiale à partir de la barre (111) dans le racloir (110).

3. L'appareil d'enlèvement de scories selon la revendication 1, dans lequel les lames (212) sont formées de manière à être courbées dans une direction radiale à partir de la barre (211) dans le racloir (210).

4. L'appareil d'enlèvement de scories selon l'une des revendications 1 à 3, dans lequel une pluralité de racloirs (110, 210, 311) sont disposés en parallèle et installés de manière à être mis en rotation par l'unité d'entraînement en rotation, dans l'unité de support de rotation.

5. L'appareil d'enlèvement de scories selon la revendication 4, dans lequel les lames (112, 212) d'un de la pluralité de racloirs (110, 210, 311) sont formées de manière à être droites dans une direction radiale de la barre (111, 211), et les lames (112, 212) d'un autre de la pluralité de racloirs (110, 210, 311) sont formées de manière à être courbées dans la direction radiale à partir de la barre (111, 211).

6. L'appareil d'enlèvement de scories selon l'une quelconque des revendications 1 à 5, dans lequel l'unité d'élévation (140) comprend:
un élément de transfert (141) installé de manière à pourvoir être déplacé dans la direction longitudinale par la première unité de transfert;
un guide d'élévation (142) conçu pour guider le mouvement ascendant et descendant de l'unité de support de rotation vers et depuis l'élément de transfert (141); et
un élément de commande d'élévation (143) conçu pour soulever et abaisser l'unité de support de rotation vers et depuis l'élément de transfert.

7. L'appareil d'enlèvement de scories selon l'une quelconque des revendications 1 à 6 dans lequel la première unité de transfert (150) comprend :
un premier cadre de transfert (151) supportant l'unité d'élévation (140), permettant le déplacement de l'unité d'élévation (140) dans la direction longitudinale;
un premier guide de transfert (152) conçu pour guider le mouvement de l'unité d'élévation (140) le long de la direction longitudinale sur le premier cadre de transfert (151); et
un premier élément de commande de transfert (153) conçu pour déplacer par va et vient l'unité d'élévation (140) dans la direction longitudinale sur le premier cadre de transfert (151).

8. L'appareil d'enlèvement de scories selon l'une des revendications 1 à 7, comprenant en outre une deuxième unité de transfert (160) conçue pour déplacer l'unité de support de rotation (120, 220) dans une direction transversale des plaques de support,
dans lequel la deuxième unité de transfert comprend (160):
un deuxième cadre de transfert (161) supportant la première unité de transfert (150), permettant le déplacement de la première unité de transfert dans (150) la direction transversale;
un deuxième guide de transfert (162) conçu pour guider le mouvement de la première unité de transfert (150) le long de la direction transversale; et
un deuxième élément de commande de transfert (163) conçu pour déplacer par va et vient la première unité de transfert (150) dans la direction transversale sur le deuxième cadre de transfert (161).

9. L'appareil d'enlèvement de scories selon l'une quelconque des revendications 1 à 5, comprenant en outre une deuxième unité de transfert (160) permettant le déplacement de l'unité de support de rotation dans la direction transversale des plaques de support,
dans lequel la deuxième unité de transfert (160) comprend:
un deuxième cadre de transfert supportant l'unité d'élévation (140), permettant le mouvement de l'unité d'élévation dans la direction transversale;
un deuxième guide de transfert guidant le mouvement de l'unité d'élévation le long de la direction transversale sur le premier cadre de transfert; et
un deuxième élément de commande de transfert déplaçant par va et vient l'unité d'élévation dans la direction transversale sur le deuxième cadre de transfert, et
dans lequel la première unité de transfert (150) comprend:
un premier cadre de transfert supportant la deuxième unité de transfert, permettant le déplacement de la deuxième unité de transfert (160) dans la direction longitudinale;
un premier guide de transfert guidant le mouvement de la deuxième unité de transfert le long de la direction longitudinale sur le premier cadre de transfert; et
un premier élément de commande de transfert déplaçant par va et vient la deuxième unité de transfert dans la direction longitudinale sur le premier cadre de transfert.

10. Une machine de découpe, comprenant
des plaques de support (11) conçues pour supporter un objet à traiter dans la machine de découpe; et
un appareil d'enlèvement de scories selon l'une des revendications 1 à 9 permettant l'enlèvement des scories des plaques de support (11) par le racloir (110, 210, 311).
